# EUROPEAN PATENT SPECIFICATION

(11) **EP 3 735 680 B1**
(45) Date of publication and mention of the grant of the patent: **07.06.2023**
(21) Application number: 19700135.7
(22) Date of filing: 04.01.2019
(51) Int. Cl.: H05B 47/16, G08B 15/00

(54) **METHOD AND DEVICE FOR THE SIMULATION OF THE PRESENCE OF HUMANS**
VERFAHREN UND VORRICHTUNG ZUR SIMULATION DES VORHANDENSEINS VON MENSCHEN
PROCÉDÉ ET DISPOSITIF DE SIMULATION DE LA PRÉSENCE D'ÊTRES HUMAINS

(30) Priority: 05.01.2018 CH 62018
(43) Date of publication of application: 11.11.2020
(73) Proprietor: Mitipi AG, 1700 Fribourg (CH)
(72) Inventor: NGUYEN, Le Kim Khanh, 4123 Allschwil (CH); CEVC, Jakob Gabriel, 8004 Zürich (CH); SCHILLIGER, Laura Kristina, 8003 Zürich (CH); STYLIANOU, Julian Stefan, 8408 Winterthur (CH)
(74) Representative: Keller Schneider Patent- und Markenanwälte AG
(86) International application number: PCT/EP2019/050130
(87) International publication number: WO 2019/134952

(56) References cited:
- WO-A1-2017/207333
- US-A1- 2015 160 636
- US-A1- 2018 211 503

## Description

### TECHNICAL FIELD

The present invention relates to a method, device and system for the simulation of the presence of humans, in particular for securing a building or dwelling or premises against theft, burglary and vandalism, and suitable for providing an occupancy simulation.

### STATE OF THE ART

It is current state of the art that several security systems exist for securing a building or dwelling.

Deterring vandalism and burglary are important for property owners. Vandalism and property theft can often be deterred merely by having the premises occupied or watched by security personnel. Making a building appear to be occupied is also an effective deterrent to burglary, vandalism and other trespass. When away from home, many residents use lighting control systems such as timers and / or carrier control units, to turn lights on and off so as to simulate occupancy of a building. Security systems are of particular interest wherein the systems are suitable for simulating occupancy of a building or dwelling.

Several devices are in known in the art, e.g. from the document US 2009/0109051 A1, which are suitable for simulating occupancy of a building by simulating light that is output from an operational TV screer

Moreover, document US 6,377,858 B1 discloses a security system for securing a building or dwelling by occupancy simulation in that appliances and devices are used in the building resp. dwelling. The security system of US 6,377,858 B1 is able to learn actual usage pattern over an extended length of time. Such security system includes a learn mode, wherein an intelligent control system records and stores the on / off events of controlled devices in the building resp. dwelling. In a run mode, the intelligent control system replays the on / off events thus reflecting the usage patterns of the resident. The controlled devices which are controlled by the intelligent control system may be lights, audio equipment, and appliances. Such system has the disadvantage that this system cannot be used instantly, since a usage pattern has to be created over a longer time period in order to have a realistic simulation.

Further document US 2016/0163169 A1 discloses a system configured to emit a presence resp. occupancy media signal in order to simulate presence in a building. The system includes a noise processing module configured to evaluate a noise signal picked up by a microphone. When a noise processing unit detects a predefined noise signal event in the picked up noise signal, a control module generates a media signal in response to the detected predefined noise signal event. Such system has the disadvantage that it only works as a reaction to a noise.

Further document WO 2017/207333 A1 discloses method and device for simulating the presence of humans as well.

There is a constant need to further improve such security systems suitable for providing an exceedingly, more realistic simulation of occupancy of a building or dwelling. Simulation of occupancy or, in general, the simulation of the presence of humans regarding any possible applications needs to be further improved constantly.

### DESCRIPTION OF THE INVENTION

The object of the present invention is to provide an improved method, device and system for securing a building or dwelling or premises, and suitable for providing a presence respectively occupancy simulation, wherein such method, device and system provides an exceedingly realistic simulation of occupancy of a building or dwelling or premise.

Next to the occupancy simulation of a building or dwelling or premises, the simulation of the presence of humans regarding further applications is possible such as, for example, the usage in the army as a fake decoration of occupancy.

Therefore, it is a further object of the present invention to provide, more generally, an improved method, device and system for an exceedingly realistic simulation of the presence of humans for any application where occupancy simulation is advantageous. Such a realistic simulation will make the owners of the device according to the present invention safer and more comfortable.

According to the present invention, a method for simulating the presence of humans comprises the method steps of
- defining activity attributes of simulated activities of a user as predefined input data,
- defining specific audio data input and visual data and time related input from the user as user preferences
wherein the user preferences are matched with attributes of activity for the generation of a time sequence of the simulated activities of the user, wherein, as an output, the time sequence of the simulated activities of the user is generated, wherein audible and visual simulations of the simulated activities of the user are played based on data on audio and visual output included in stored activities contents, and wherein the visual simulations include shadow simulations.

A device for simulating the presence of humans and suitable for providing an occupancy simulation according to the present invention comprises
- a storage unit for storing activities content, predefined activity attributes of simulated activities of a user, specific audio data input and visual data, and time related input from the user as user preferences;
- a lighting unit and audio unit for playing, as an output, a time sequence of the simulated activities of the user;
- a control unit;
wherein the control unit is configured to match the user preferences with the activity attributes for the generation of the time sequence for the simulated activities of the user, wherein the lighting unit and audio unit are configured to play, as an output, the time sequence of the simulated activities of the user, wherein the device is further configured to play audible and visual simulations of the simulated activities of the user based on data on an audio and visual output included in the activity contents stored in the storage unit, and wherein the visual simulations include shadow simulations.

A system for simulating the presence of humans and suitable for providing an occupancy simulation according to the present invention, comprises multiple devices according to the present invention.

Compared to the known device of US 6,377,858 B1 only having a learning function, a method according to the present invention advantageously allows an instant customization towards an exceedingly realistic simulation of the presence of humans.

Within the meaning of the present invention, such method is applicable to any device, or interacting devices within a system which is respectively are able to play an outputted time sequence of audio and / or visual activities. In other words, such time sequence may be understood as an ongoing simulation stream.

Within the meaning of the present invention, the control unit may be a processing unit capable for processing algorithms and capable for telling input and output devices how to respond to a program's instructions.

According to a preferred embodiment of a device according to the present invention, the storage unit may be further configured to store a playback history of activities. Activity content can be defined as a content behind an activity to be played (visual or audio), e.g. a WAVE file (".wav") for an audio simulation.

The device according to the present invention is configured to play sophisticated visual simulations such as shadow simulations and audio simulations such as simulating the presence of pets. The device according to the present invention is further configured to play combined visual and audio television simulations.

Within the meaning of the present invention, activities include data on the visual output respectively on the audio output. Visual effects include but are not limited to shadow simulations, television simulation, or turning on / off lights. Audio effects may include but are not limited to pet noises, sport activities etc.

Within the meaning of the present invention, attributes (in the context of activities) are defined as pre-set parameters such as for example the likelihood for certain activities or an illumination threshold.

The term "attributes of activity" means that each activity is tagged with predefined, internal attributes serving as reference to the construction of a sequence of activities. Examples of such internal attributes are illustrated in table 1 below.

Within the meaning of the present invention, user preferences are defined as predefined, specific audio data input and visual data input and a time related input from the user, for example, whether he has got an animal, where he lives, which types of activities he prefers, his location and time zone, etc. Time related inputs with respect to user preferences can be understood as e.g. the geographic conditions influencing a time slot for an activity in the generated time sequence of activities.

Such definition of the user preferences advantageously improves the user's confidence that the device according to the present invention generates occupancy resp. presence simulation as realistic as possible.

Preferably, controlled devices, which are controlled by the control unit according to the invention, may be lights resp. lighting unit, audio equipment resp. audio unit, and appliances.

According to a preferred embodiment of the invention, the device integrates a lighting unit, and an audio unit and may integrate further appliances. Additionally, the device according to the invention may be configured to interact with lighting units, audio units and / or further appliances outside the device. The integration or interaction with other devices might be done directly or via a server, an application programming interface (API) or other means of communication.

According to a further preferred embodiment of the invention, the control unit of the device may be further configured to further match external factor data with the user preferences and the attributes of activity.

Within the meaning of the present invention, external factor data can be defined as physically measurable data such as weather data, values from an illumination sensor and / or geographic data such as location of the user with its local day time. For example, by combination of the date and geographic location, changes in day length related to the latitude respectively seasons can be adjusted.

Combining the external factor data with the user preferences and the attributes of activity advantageously leads to an improved, more realistic simulation of occupancy of a building or dwelling.

Furthermore, combining physically measurable data with geographic data (defined both as external factor data) can help verifying that the simulation is running correctly respectively in a realistic way. For example, an illumination under a certain threshold measured by the illumination sensor which is implausible by time zone respectively geographic latitude, may be an indication for a dramatic weather change and be verified by consulting weather data.

According to a further aspect of the present invention, a system with several interacting devices is provided comprising a control unit, of physical or virtual nature, which is configured to match user preferences with attributes of activity. Within the meaning of the present invention, such system comprises a plurality of devices executing certain functions and coupled respectively interacting with each other. As an example, the system includes the device according to the invention and may additionally include any one lighting units and / or audio units and / or further appliances of which integration or interaction might be done directly or via a server, an application programming interface (API) or other means of communication. Preferably, the interacting devices are playing an output time sequence of simulated activities generated by the method according to the present invention.

### BRIEF DESCRIPTION OF THE DRAWINGS

A preferred exemplary embodiment of the subject matter of the invention is described below in conjunction with the attached drawings.
- Fig. 1: shows a generalized flowchart of a method of a preferred embodiment of the security device according to the present invention;
- Fig. 2: shows a more detailed flowchart of the method of a preferred embodiment of the security device according to the present invention;
- Fig. 3: shows a schematic view of a preferred embodiment of the security device according to the present invention;
- Fig. 4: shows a schematic view of a preferred embodiment the system with multiple devices according to the present invention.

### DESCRIPTION

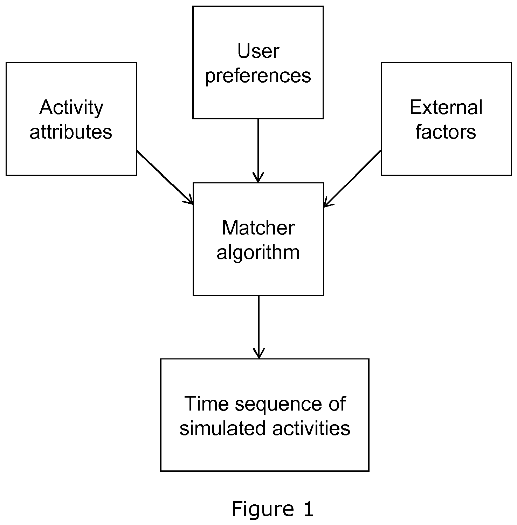

**Fig. 1** shows a generalized flowchart of a method of a preferred embodiment of the security device according to the present invention.

The method comprises a method step, wherein user preferences are matched with attributes of activity for the generation of a time sequence for simulated activities by means of a dedicated matcher algorithm. Preferably, the method further includes a further method step, wherein external factor data are further matched with the user preferences and the attributes of activity.

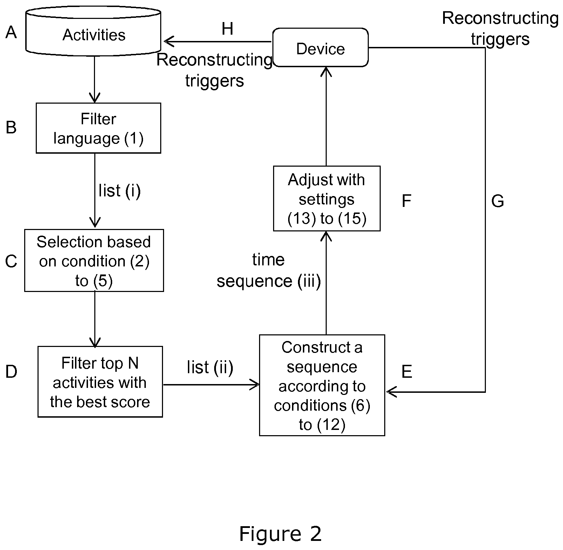

**Fig. 2** shows a more detailed flowchart of the method of the preferred embodiment of the security device according to the present invention.

The following table 1 shows examples of activity attribute and user preferences correlated to a function of the matcher algorithm:

| **No.** | **Matcher algorithm (fᵢ)** | **Score (Sᵢ)** | **Activity attributes (on the device side)** | **User preferences** | **External data** |
|---|---|---|---|---|---|
| | | | | | |
| 1 | f1 | ∞ | language | language | |
| 2 | f2 | 1 | tags | tags | |
| 3 | f3 | 1 | type | type | |
| 4 | f4 | 1 | environment | environment | |
| 5 | f5 | 1 | room type | room type | |
| 6 | f6 | 1 | time, day of week, likelihood | location | local date, time |
| 7 | f7 | 1 | geographic data | location, time zone | local date, time |
| 8 | f8 | 1 | Weather | | weather data |
| 9 | f9 | 1 | composition | | illumination sensor |
| 10 | f10 | 1 | cooldown | | |
| 11 | f11 | 1 | minimum break period | | |
| 12 | f12 | | Length | | |
| 13 | N/A | N/A | Volume | volume | |
| 14 | N/A | N/A | brightness | brightness level | |
| 15 | N/A | N/A | illumination threshold | | illumination sensor |

As can be seen from the table 1 above, the matcher algorithm of the method of the present invention is able to decide, based on the activity attribute respectively user preference, the processing and prioritizing of the data. The output of the method of the present invention is a time sequence of simulated activities. Moreover, it can be seen that the matcher algorithm may be understood as a plurality of functions fᵢ which are preferably defined for every condition.

A possible implementation of the method according to the present invention, based e.g. on a score function, can be described as follows:
Step A: providing a database of all potential activities;
Step B: selecting from the database all of the activities matching the selected language of the user, resulting in a first list (i) of activities;
Step C: Adding a weighted score Sᵢ for each of the conditions (2) to (5) according to table 1, and each of the selected activities of the first list (i). In other words, user preferences are matched with activity attributes in this method step.
Step D: Sorting such first list (i) by the score and a number of activities with the best score are selected (filtering), resulting in a second list (ii) of activities;
Step E: Constructing a time sequence of activities (iii) based on the second list (ii) of activities, wherein each activity in the second list (ii) might be repeatedly selected to put on the time sequence (iii). Within the meaning of the present invention, the selection of which activity to put at each time slot of the sequence is evaluated by the conditions specified in (6) to (12) of table 1, in that each satisfied condition contributes a score Sᵢ to the selection of the activity. This selection repeats until the length of the time sequence is filled, i.e. if, for example, a certain maximum time length is reached (e.g. 7 days of absence of the user respectively owner of the device). In other words, preferably, external factor data are further matched with the user preferences and the attributes of activity according to method step E.
Step F: playing sequentially each of the activities in the generated time sequence (iii), being adjusted to the settings respectively conditions as specified from (13) to (15) according to table 1.
Step G: After having finished playing each activity of the time sequence (iii), or by a trigger from external data, the time sequence (iii) of activities may be reconstructed adjusting to any new changes of the conditions (6) to (12).
Step H: Optionally, triggered by changing the user preferences, the method steps A to D may be performed newly, leading to the reconstruction of the sequence (iii) of activities.

The conditions No. (1) to (15) as defined in table 1 are further explained and exemplified as follows:
(1): All activities may be matched by function f1 corresponding to the language set by the user (i.e. user preference).
(2): "tags" may be understood as kind of context of the activity which the user respectively owner of the device likes, for example [DOG, CAT, FAMILY, ANIMAL, ...]. Preferably, the dedicated function f2 is defined in way to partly match activity attributes in respect of the user preference depending on the similarities between the kind of context of activities.
(3): "type" may be understood as type of the activity which the user respectively owner of the device likes, for example [ENTERTAINMENT, WORK, CHORES, COOKING, HYGIENE, ANIMAL, SPORT, ...]. Preferably, the dedicated function f3 is defined in the way of partly matching (like f2).
(4): "environment" may be understood as the area where the user respectively owner of the device is living and the device is used respectively placed, for example [URBAN, SUB_URBAN, VILLAGE, REMOTE, ...]. Preferably, the dedicated function f4 is defined in the way of partly matching. For example, contexts of activities like URBAN can also be matched with user preferences of SUB_URBAN.
(5): "room type" may be understood as the placement of the device within the home of the user respectively owner, for example [BEDROOM, LIVING ROOM, CORRIDOR, KITCHEN, OFFICE, ...]. Preferably, the dedicated function f5 is defined in the way of partly matching. For example, attributes of activities of LIVING ROOM can also be matched to user preferences of CORRIDOR.
(6): "time, day of week, likelihood" may be understood as the day and (day) time related probability of occurrence of certain activities and the likelihood of repetition. For example, showering and playing music normally does not happen at night, cooking normally does not happen more than three times per day, or certain activities are more likely to happen on the weekend. Preferably, the dedicated function f6 is defined in the way of partly matching.
(7): "geographic data" may be understood as day and (day) time related occurrence of activities related to the geographic location, i.e. time zone and latitude. For example, the occurrence of visual simulations has to be adjusted with respect to changes in day length related to the latitude and / or seasons. Preferably, the dedicated function f7 is defined in the way of partly matching.
(8): "weather" may be understood as the consultation of weather data. For example, simulation of more visual activities gaining preference on a stormy or overcast day, the impression of presence is maximised. Preferably, the dedicated function f8 is defined in the way of partly matching.
(9): "composition" may be understood as adjusting the output type of the activities for time sequence (iii) creation based on the data of the illumination sensor, for example [VISUAL, AUDIO, BOTH]. As an example, in a dark environment, activities with visual content are preferably selected more frequently than activities only with audio content, since it reflects normal people's behaviour to turn lights on when it is dark. Preferably, the dedicated function f9 is defined in a way to provide the best selection of the composition.
(10): "cooldown" may be understood as preventing the same activity to be scheduled again before its cooldown period is over. For example, people will not take another shower right after just having had a shower. Preferably, the dedicated function f10 is defined in a way not to select the same kind of activity depending on the cooldown period.
(11): "minimum break period" may be understood as having a minimum break period before a next activity is scheduled. For example, people would likely rest some minutes after a shower. Preferably, the dedicated function f11 is defined in a way not to select any activities depending on the minimum break.
(12): "length" may be understood that in case of a temporarily limited simulation time, the activities and schedule of activities will be built in regards to that. For example, if the simulation is scheduled to run for 30 minutes, the algorithm will not start / play a 3 hours activity. Preferably, the dedicated function f12 is defined in a way to select activities fitting to the simulation time.
(13): "volume" may be understood as adjusting the audio volume of the playback according to the preferred volume of the user respectively owner of the device.
(14): "brightness" may be understood as setting the brightness level according to the preferred brightness of the user respectively owner of the device.
(15): "illumination threshold" may be understood as activating the visual part of the playback if the value of the illumination sensor drops below a certain threshold for a certain amount of time disregarding the time of the day.

As a further option, the user can feedback whether the simulated activities are realistic or not with the advantage that the feedbacks will help refine the corresponding user preferences and activity attributes.

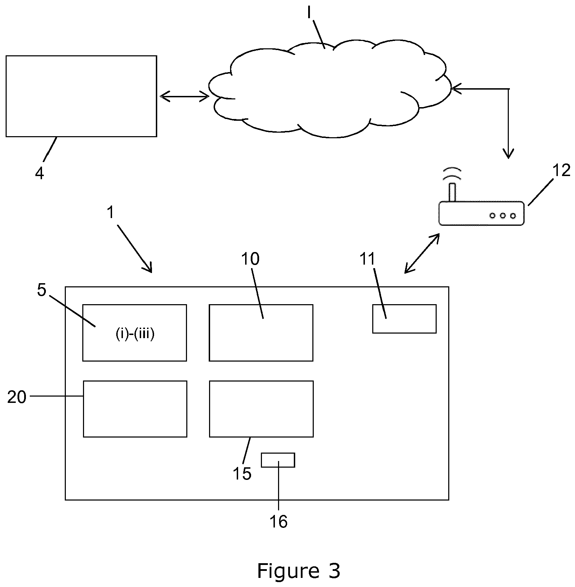

**Fig. 3** shows a schematic view of a preferred embodiment of the security device 1 according to the present invention, wherein the security device 1 is, in principle, one integrated device capable of fulfilling the method according to the present invention. The security device 1 comprises a control unit 5, a storage unit 10, a, preferably multi-colour, lighting unit 15 and an audio unit 20. As indicated in Fig. 3, preferably, the control unit 5 of the device 1 is configured and capable of carrying out the whole method according to the present invention, i.e. generating the first list (i), the second list (ii) and the time sequence (iii) of activities. The device may further comprise a Wifi (or other connectivity) module 11 enabling the communication within a wired (i.e. local LAN) or wireless network environment via an Internet router 12 and, thereby, capable e.g. for receiving program updates from a server 4. The storage unit 10 is capable for storing such program updates, activities contents, activities attributes, user preferences, external data etc. Preferably, the control unit 5 respecttively lighting unit 15 is coupled functionally with an illumination sensor 16 in order to activate the visual part of the playback if the value of the illumination sensor drops below a certain threshold.

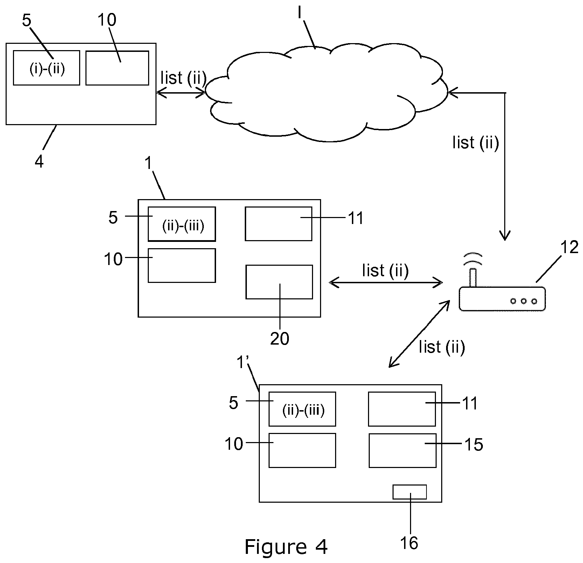

**Fig. 4** shows a schematic view of an embodiment of a system according to the present invention with multiple devices according to the present invention.

As exemplified in Fig. 4, each unit in the system may be responsible of at least one part of the method. Preferably, the system comprises a server 4 (or multiple servers), wherein the server 4 comprises its own control unit 5 and storage unit 10 and runs a part of or the whole part of the method according to the present invention. As indicated in Fig. 4, the control unit 5 of the server 4 is configured here to run process steps A to D generating the list (i) and list (ii) (see implementation of the method according to Fig. 2). Several devices capable of a visual and audio simulation may be running part or the whole of the method, such as the devices 1; 1'. The server 4 may be configured for transmitting the generated list (ii) to the devices 1; 1'.

According to the system as shown in Fig. 4, a server 4 may be part of wired (i.e. local LAN) or a wireless network environment (e.g. a cloud) interacting via the Internet I and an Internet router 12 with the devices 1; 1'. Device 1 may comprise a Wifi module 11 enabling the communication within the wireless network environment, and an audio unit 20.

In one example, the devices 1 and the device 1' comprise a control unit 5 and a storage unit 10, wherein the control unit 5 is configured and capable of carrying out part of the method according to the present invention, i.e. generating time sequence (iii) of activities based on the received second list (ii).

The device 1' may comprise a Wifi (or other connectivity) module 11 enabling the communication within the wired or wireless network environment, and comprises a, preferably multi-colour, lighting unit 15. Preferably, such lighting unit 15 is coupled functionally via the control unit 5 with an illumination sensor 16 in order to activate the visual part of the playback if the value of the illumination sensor 16 drops below a certain threshold.

### LIST OF REFERENCE NUMERALS

1; 1' Security device
4 (Cloud) Server
5 Control unit
10 Storage unit
11 Wifi module
12 Internet router
15 (Multi colour) lighting unit
16 Illumination sensor
20 Audio unit
i First list of activities
ii Second list of activities
iii Time sequence of activities
I Internet
Sᵢ Score

## Claims

1. Method for simulating the presence of humans, comprising the method steps:
- defining activity attributes of simulated activities of a user as predefined input data,
- defining specific audio data input and visual data and time related input from the user as user preferences.
wherein the user preferences are matched with attributes of activity for the generation of a time sequence (iii) of the simulated activities of the user,
wherein, as an output, the time sequence of the simulated activities of the user is generated,
wherein audible and visual simulations of the simulated activities of the user are played based on data on audio and visual output included in stored activities contents, and
wherein the visual simulations include shadow simulations.

2. Method according to claim 1, **characterized in that** a visual part of a playback is activated if a value of an illumination sensor (16) drops below a certain threshold.

3. Method according to any of the preceding claims, **characterized in that** external factor data, such as physically measurable data and/or geographic data, are further matched with the user preferences and the attributes of activity for the generation of the time sequence (iii) for simulated activities of the user.

4. Method according to claim 3,
**characterized in that**
the generated time sequence (iii) for simulated activities of the user may be reconstructed adjusting to any new changes by a trigger from the external factor data.

5. Method according to any of the preceding claims,
**characterized in that**,
triggered by changing the user preferences, the method is performed newly, leading to the reconstruction of the sequence (iii) of simulated activities of the user.

6. Device (1), for simulating the presence of humans and suitable for providing an occupancy simulation, comprising:
- a storage unit (10) for storing activities content, predefined activity attributes of simulated activities of a user, specific audio data input and visual data, and time related input from the user as user preferences;
- a lighting unit (15) and audio unit (20) for playing, as an output, a time sequence (iii) of the simulated activities of the user;
- a control unit (5);
wherein the control unit (5) is configured to match the user preferences with the activity attributes for the generation of the time sequence for the simulated activities of the user,
wherein the lighting unit (15) and audio unit (20) are configured to play, as an output, the time sequence (iii) of the simulated activities of the user,
wherein the device is further configured to play audible and visual simulations of the simulated activities of the user based on data on an audio and visual output included in the activity contents stored in the storage unit (10), and
wherein the visual simulations include shadow simulations.

7. Device (1) according to claim 6, **characterized in that** the lighting unit (15) is functionally coupled via the control unit (5) with an illumination sensor (16) in order to activate a visual part of a playback if a value of the illumination sensor (16) drops below a certain threshold.

8. Device (1) according to any of claim 6 or 7, **characterized in that** the control unit (5) is configured to further match external factor data, such as physically measurable data and/or geographic data, with the user preferences and the attributes of activity.

9. Device (1) according to claim 8, **characterized in that** the control unit (5) is configured to reconstruct the generated time sequence (iii) of the simulated activities of the user for adjusting to any new changes by a trigger from the external factor data.

10. Device (1) accordina to anv of the orecedino claims 6 to 9 **characterized in that** the control unit (5) is configured to reconstruct the time sequence (iii) of the simulated activities of the user triggered by a change of the user preferences.

11. System for simulating the presence of humans and suitable for providing an occupancy simulation, **characterized in that** the system comprises multiple devices (1) according to any of claims 6 to 10.

12. System according to claim 11, **characterized in that** the devices (1) are configured to execute certain functions and coupled respectively interacting with each other.

13. System according to claim 11 or 12, **characterized by** a server (4) comprising its own control unit (5) and a storage unit (10) and configured to carry out a method according to claims 1 to 5.

## Patentansprüche

1. Verfahren zum Simulieren der Anwesenheit von Menschen, umfassend die Verfahrensschritte:
- Definieren von Aktivitätsattributen von simulierten Aktivitäten eines Anwenders als vordefinierte Eingabedaten,
- Definieren von spezifischen Audiodateneingaben und visuellen Dateneingaben und zeitbezogenen Eingaben des Anwenders als Anwenderpräferenzen,
wobei die Anwenderpräferenzen mit Aktivitätsattributen zur Generierung einer Zeitsequenz (iii) der simulierten Aktivitäten des Anwenders abgeglichen werden,
wobei, als eine Ausgabe, die Zeitsequenz der simulierten Aktivitäten des Anwenders erzeugt wird,
wobei akustische und visuelle Simulationen der simulierten Aktivitäten des Anwenders basierend auf Daten über Audio- und visuelle Ausgabe, die in gespeicherten Aktivitätsinhalten enthalten sind, abgespielt werden, und
wobei die visuellen Simulationen Schattensimulationen beinhalten.

2. Verfahren nach Anspruch 1, **dadurch gekennzeichnet, dass** ein visueller Teil einer Wiedergabe aktiviert wird, wenn ein Wert eines Beleuchtungssensors (16) unter einen bestimmten Schwellenwert abfällt.

3. Verfahren nach einem der vorangehenden Ansprüche, **dadurch gekennzeichnet, dass** Daten externer Faktoren, wie beispielsweise physikalisch messbare Daten und/oder geographische Daten, ferner mit den Anwenderpräferenzen und den Aktivitätsattributen zur Generierung der Zeitsequenz (iii) für simulierte Aktivitäten des Anwenders abgeglichen werden.

4. Verfahren nach Anspruch 3,
**dadurch gekennzeichnet, dass**
die generierte Zeitsequenz (iii) für simulierte Aktivitäten des Anwenders unter Anpassung an jegliche neue Änderungen durch einen Auslöser von den Daten externer Faktoren wiederaufgebaut werden kann.

5. Verfahren nach einem der vorangehenden Ansprüche,
**dadurch gekennzeichnet, dass**
das Verfahren ausgelöst durch Ändern der Anwenderpräferenzen neu durchgeführt wird, was zum Wiederaufbau der Sequenz (iii) der simulierten Aktivitäten des Anwenders führt.

6. Vorrichtung (1) zum Simulieren der Anwesenheit von Menschen und geeignet zur Bereitstellung einer Bewohntheitssimulation, umfassend:
- eine Speichereinheit (10) zum Speichern von Aktivitätsinhalten, vordefinierten Aktivitätsattributen von simulierten Aktivitäten eines Anwenders, spezifischen Audiodateneingaben und visuellen Dateneingaben sowie zeitbezogenen Eingaben von dem Anwender als Anwenderpräferenzen;
- eine Beleuchtungseinheit (15) und eine Audioeinheit (20) zum Abspielen, als eine Ausgabe, einer Zeitsequenz (iii) der simulierten Aktivitäten des Anwenders;
- eine Steuereinheit (5);
wobei die Steuereinheit (5) konfiguriert ist, die Anwenderpräferenzen mit den Aktivitätsattributen für die Generierung der Zeitsequenz für die simulierten Aktivitäten des Anwenders abzugleichen,
wobei die Beleuchtungseinheit (15) und die Audioeinheit (20) konfiguriert sind, die Zeitsequenz (iii) der simulierten Aktivitäten des Anwenders, als eine Ausgabe, abzuspielen,
wobei die Vorrichtung ferner konfiguriert ist, akustische und visuelle Simulationen der simulierten Aktivitäten des Anwenders basierend auf Daten über Audio- und visuelle Ausgabe abzuspielen, die in den in der Speichereinheit (10) gespeicherten Aktivitätsinhalten enthalten sind, und
wobei die visuellen Simulationen Schattensimulationen enthalten.

7. Vorrichtung (1) nach Anspruch 6, **dadurch gekennzeichnet, dass** die Beleuchtungseinheit (15) über die Steuereinheit (5) funktionell mit einem Beleuchtungssensor (16) gekoppelt ist, um einen visuellen Teil einer Wiedergabe zu aktivieren, wenn ein Wert des Beleuchtungssensors (16) unter einen bestimmten Schwellenwert abfällt.

8. Vorrichtung (1) nach einem der Ansprüche 6 oder 7, **dadurch gekennzeichnet, dass** die Steuereinheit (5) konfiguriert ist, ferner Daten externer Faktoren, wie beispielsweise physikalisch messbare Daten und/oder geographische Daten, mit den Anwenderpräferenzen und den Aktivitätsattributen abzugleichen.

9. Vorrichtung (1) nach Anspruch 8, **dadurch gekennzeichnet, dass** die Steuereinheit (5) konfiguriert ist, die generierte Zeitsequenz (iii) der simulierten Aktivitäten des Anwenders zur Anpassung an jegliche neue Änderungen durch einen Auslöser von den Daten externer Faktoren wiederaufzubauen.

10. Vorrichtung (1) nach einem der vorangehenden Ansprüche 6 bis 9, **dadurch gekennzeichnet, dass** die Steuereinheit (5) konfiguriert ist, die Zeitsequenz (iii) der simulierten Aktivitäten des Anwenders ausgelöst durch eine Änderung der Anwenderpräferenzen wiederaufzubauen.

11. System zum Simulieren der Anwesenheit von Menschen und geeignet zur Bereitstellung einer Bewohntheitssimulation, **dadurch gekennzeichnet, dass** das System mehrere Vorrichtungen (1) nach einem der Ansprüche 6 bis 10 umfasst.

12. System nach Anspruch 11, **dadurch gekennzeichnet, dass** die Vorrichtungen (1) konfiguriert sind, bestimmte Funktionen auszuführen, und jeweils miteinander interagierend gekoppelt sind.

13. System nach Anspruch 11 oder 12, **gekennzeichnet durch** einen Server (4), der seine eigene Steuereinheit (5) und eine Speichereinheit (10) umfasst und konfiguriert ist, ein Verfahren nach einem der Ansprüche 1 bis 5 auszuführen.

## Revendications

1. Procédé de simulation de la présence d'êtres humains, comprenant les étapes de procédé suivantes :
- la définition d'attributs d'activité d'activités simulées d'un utilisateur en tant que données d'entrée prédéfinies,
- la définition d'une entrée de données audio spécifique et d'une entrée de données visuelles et liée au temps depuis l'utilisateur en tant que préférences d'utilisateur,
dans lequel les préférences d'utilisateur sont mises en correspondance avec des attributs d'activité pour la génération d'une séquence temporelle (iii) des activités simulées de l'utilisateur,
dans lequel, en tant qu'une sortie, la séquence temporelle des activités simulées de l'utilisateur est générée,
dans lequel des simulations audibles et visuelles des activités simulées de l'utilisateur sont lues sur la base de données relatives à une sortie audiovisuelle incluse dans des contenus d'activité stockés, et
dans lequel les simulations visuelles incluent des simulations d'ombre.

2. Procédé selon la revendication 1, **caractérisé en ce qu'**une partie visuelle d'une lecture est activée si une valeur d'un capteur d'éclairage (16) devient inférieure à un certain seuil.

3. Procédé selon l'une quelconque des revendications précédentes, **caractérisé en ce que** des données de facteurs externes, comme des données mesurables physiquement et/ou des données géographiques, sont en outre mises en correspondance avec les préférences d'utilisateur et les attributs d'activité pour la génération de la séquence temporelle (iii) pour des activités simulées de l'utilisateur.

4. Procédé selon la revendication 3,
**caractérisé en ce que**
la séquence temporelle (iii) générée pour des activités simulées de l'utilisateur peut être reconstruite en s'adaptant à de nouveaux changements par un déclenchement à partir des données de facteurs externes.

5. Procédé selon l'une quelconque des revendications précédentes,
**caractérisé en ce que**,
lors d'un déclenchement par un changement des préférences d'utilisateur, le procédé est réalisé à nouveau, en engendrant la reconstruction de la séquence (iii) d'activités simulées de l'utilisateur.

6. Dispositif (1) de simulation de la présence d'êtres humains et apte à fournir une simulation d'occupation, comprenant :
- une unité de stockage (10) pour stocker des contenus d'activité, des attributs d'activité prédéfinis d'activités simulées d'un utilisateur, une entrée de données audio spécifique et une entrée de données visuelles et liée au temps depuis l'utilisateur en tant que préférences d'utilisateur ;
- une unité d'éclairage (15) et une unité audio (20) pour la lecture, en tant qu'une sortie, d'une séquence temporelle (iii) des activités simulées de l'utilisateur ;
- une unité de commande (5) ;
dans lequel l'unité de commande (5) est configurée pour mettre en correspondance les préférences d'utilisateur avec les attributs d'activité pour la génération de la séquence temporelle pour les activités simulées de l'utilisateur,
dans lequel l'unité d'éclairage (15) et une unité audio (20) sont configurées pour lire, en tant qu'une sortie, la séquence temporelle (iii) des activités simulées de l'utilisateur,
dans lequel le dispositif est en outre configuré pour lire des simulations audibles et visuelles des activités simulées de l'utilisateur sont lues sur la base de données relatives à une sortie audiovisuelle incluse dans les contenus d'activité stockés dans l'unité de stockage (10), et
dans lequel les simulations visuelles incluent des simulations d'ombre.

7. Dispositif (1) selon la revendication 6, **caractérisé en ce que** l'unité d'éclairage (15) est couplée fonctionnellement, par l'intermédiaire de l'unité de commande (5), à un capteur d'éclairage (16) pour activer une partie visuelle d'une lecture si une valeur d'un capteur d'éclairage (16) devient inférieure à un certain seuil.

8. Dispositif (1) selon la revendication 6 ou 7, **caractérisé en ce que** l'unité de commande (5) est configurée en outre pour mettre en correspondance des données de facteurs externes, comme des données mesurables physiquement et/ou des données géographiques, avec les préférences d'utilisateur et les attributs d'activité.

9. Dispositif (1) selon la revendication 8, **caractérisé en ce que** l'unité de commande (5) est configurée pour reconstruire la séquence temporelle (iii) générée des activités simulées de l'utilisateur pour s'adapter à de nouveaux changements par un déclenchement à partir des données de facteurs externes.

10. Dispositif (1) selon l'une quelconque des revendications 6 à 9, **caractérisé en ce que** l'unité de commande (5) est configurée pour reconstruire la séquence temporelle (iii) des activités simulées de l'utilisateur lors d'un déclenchement par un changement des préférences d'utilisateur.

11. Système de simulation de la présence d'êtres humains et apte à fournir une simulation d'occupation, **caractérisé en ce que** le système comprend de multiples dispositifs (1) selon l'une quelconque des revendications 6 à 10.

12. Système selon la revendication 11, **caractérisé en ce que** les dispositifs (1) sont configurés pour exécuter certaines fonctions et sont couplés respectivement en interaction l'un avec l'autre.

13. Système selon la revendication 11 ou 12, **caractérisé par** un serveur (4) comprenant sa propre unité de commande (5) et une unité de stockage (10) et configuré pour réaliser un procédé selon les revendications 1 à 5.
